# EUROPÄISCHE PATENTSCHRIFT

(11) **EP 0 894 255 B1**
(45) Veröffentlichungstag und Bekanntmachung des Hinweises auf die Patenterteilung: **24.11.1999**
(21) Anmeldenummer: 97920681.0
(22) Anmeldetag: 14.04.1997
(51) Int. Cl.: G01M 17/007

(54) **Steuern eines zumindest eine Prüfgasse aufweisenden Prüfsystems für Kraftfahrzeuge**
Controlling a test system for motor vehicles with at least one test lane
Pilotage d'un système d'essai avec au moins une piste d'essai

(30) Priorität: 16.04.1996 DE 19615008
(43) Veröffentlichungstag der Anmeldung: 03.02.1999
(73) Patentinhaber: MAHA Maschinenbau Haldenwang GmbH & Co. KG, 87490 Haldenwang (DE)
(72) Erfinder: KNESTEL, Anton, D-87496 Hopferbach (DE)
(74) Vertreter: Beetz & Partner Patentanwälte
(86) Internationale Anmeldenummer: EP9701868
(87) Internationale Veröffentlichungsnummer: WO9739324

(56) Entgegenhaltungen:
- EP-A- 0 306 362
- EP-A- 0 602 920
- ATZ AUTOMOBILTECHNISCHE ZEITSCHRIFT, Bd. 79, Nr. 9, 1977, STUTTGART DE, Seiten 401-406, XP002036548 H.-G. HIRSCHBERGER: "DAS AUTOMATISIERTE PRÜFSTRASSENSYSTEM DES TÜV RHEINLAND"
- REGELUNGS-TECHNISCHE PRAXIS, Bd. 16, Nr. 12, 1974, MUNCHEN DE, Seiten 315-322, XP002036549 K. LÖNS U.A.: "DAS HIERARCHISCHE, DEZENTRAL STRUKTURIERTE PROZESSLEITSYSTEM IM VERSUCHSZENTRUM DES VOLKWAGENWERKS"

## Beschreibung

Die Erfindung betrifft ein Verfahren und eine Vorrichtung zum Steuern eines zumindest eine Prüfgasse aufweisenden Prüfsystems für Kraftfahrzeuge (Euro-System).

Gemäß dem Stand der Technik sind Prüfstraßen bekannt, die über ein Kommunikationspult alle Bedienelemente und Fuktionen zusammenfassen. Hierbei werden alle von den einzelnen Prüfgeräten ermittelten Werte in einer zentralen Einheit verarbeitet und bewertet.

Ein derartiges System hat jedoch den Nachteil, daß der die Prüfung des Fahrzeugs durchführende Prüfer beim Wechsel von einer Prüfstraße zu einer anderen Prüfstraße erneut die sepzifischen Fahrzeugdaten in das Steuersystem dieser neuen Prüfstraße eingeben muß, um die Prüfung durchzuführen.

Insbesondere kann es bei größeren Installationen von Prüfstraßen wichtig sein, daß der Prüfer ohne Probleme das Fahrzeug von einer ersten Prüfgasse zu einer zweiten Prüfgasse bewegen kann, um die noch nicht vorgenommenen Prüfungen in der zweiten Prüfgasse durchzuführen. Dies ist insbesondere dann von Bedeutung, wenn eine Sektion der ersten Prüfgasse blockiert ist, jedoch die Sektion der zweiten Prüfgasse mit derselben Funktion betriebsbereit ist.

Eine Aufgabe der Erfindung ist es, ein Verfahren zum Steuern eines zumindest eine Prüfgasse aufweisenden Prüfsystems für Kraftfahrzeuge und eine Vorrichtung zur Durchführung dieses Verfahrens zu schaffen, die ein automatisiertes und schnelles Prüfen von Kraftfahrzeugen bei einer hohen Flexibilität erlauben und eine hohe Auslastung gewährleisten.

Diese Aufgabe wird gemäß den Merkmalen der unabhängigen Patentansprüche gelost. Die abhängigen Patentansprüche geben vorteilhafte Ausführungsformen und Weiterentwicklungen der Erfindung an.

Erfindungsgemäß wird für jedes zu prüfende Kraftfahrzeug eine eindeutige und aktuelle Identifikationsnummer von dem System erzeugt. Diese Identifikationsnummer kann eine fortlaufende Nummer sein. Nach dem Erzeugen dieser Identifikationsnummer wird ein Prüfdatensatz mit der Identifikationsnummer als Kenmung erzeugt, wobei dieser Prüfdatensatz eine vorbestimmte Anzahl von Datenfeldern aufweist. Der Prüfdatensatz wird zu einer Arbeitsstation des Systems geladen und es wird ein Prüfzyklus einer Prüfstation durchgeführt. Bei diesem Prüfzyklus werden Meßdaten erfaßt, die zu der Arbeitsstation übergeben werden. Die Datenfelder des Prüfdatensatzes werden nun selektiv mit den empfangenen Meßdaten gefüllt. Anschließend können die Inhalte der Datenfelder des Prüfdatensatzes auf einem Ausgabegerät ausgegeben werden.

Das Ausgabegerät kann ein Drucker und/oder ein Bildschirm sein.

Erfindungsgemäß können die Prüfzyklen der Prüfstationen von einem Steuermodul gesteuert werden, welches der jeweiligen Prüfstation zugeordnet ist. Diese Steuermodule können über einen Feldbus mit einem Steuerknoten verbunden sein, welcher sich in einer Arbeitsstation befindet. Die Datenübertragung zwischen den einzelnen Steuermodulen und dem Steuerknoten kann elektrisch, optisch oder elektromagnetisch erfolgen.

Erfindungsgemäß können mehrere Arbeitsstationen vorgesehen sein, welche mit einem LAN (Lokalnetz) miteinander verbunden sind. Diese Arbeitsstationen können sog. Clients sein, die mit einem Server verbunden sind. Diese LAN-Struktur stellt jedoch nur ein Beispiel dar. Denkbar ist es ebenso, Arbeitsstationen zu verwenden, welche lediglich als Terminals dienen, wobei diese Terminals mit einem Zentralrechner verbunden sind.

Die Arbeitsstationen können so verteilt sein, daß eine Arbeitsstation in einer Bürosektion angeordnet ist und eine weitere Arbeitsstation an der Prüfgasse. Wenn mehrere Sektionen für diese Prüfgasse vorgesehen sind, so kann jeweils für jede Sektion eine Arbeitsstation vorgesehen sein.

Mit den Arbeitsstationen der Prüfgasse kann ein Feldbus verbunden sein, welcher wiederum mit Steuermodulen in Verbindung steht. Diese Steuermodule stellen programmierbare Elektronikeinheiten dar, die einen Prüfzyklus des jeweiligen Prüfgeräts durchführen können und weiterhin die erforderlichen Meßwerte aufnehmen. Diese Meßwerte werden dann über den Feldbus zu dem Steuerknoten übertragen, welcher sich in der jeweiligen Arbeitsstation befindet.

Diese Meßdaten können dann beispielsweise auf einem Zentralrechner (Server) abgespeichert und verwaltet werden.

Weiterhin kann an der in der Bürosektion stehenden Arbeitsstation ein Chipkartenleser angeordnet werden. Dieser Chipkartenleser kann dazu verwendet werden, die Identifikationsnummer des aktuellen Prüfvorgangs auf eine Chipkarte abzuspeichern. Diese Chipkarte kann dann in einen zweiten Chipkartenleser eingeschoben werden, welcher sich an einer ersten Arbeitsstation der Prüfgasse befindet. Dadurch kann die Identifikationsnummer dieser Chipkarte gelesen und zur betreffenden Arbeitsstation übertragen werden. Wie später noch ausführlicher beschrieben wird, dient das Lesen der Chipkarte zur Initialisierung des Prüfvorgangs dahingehend, daß der Arbeitsstation mitgeteilt wird, welches Fahrzeug zur Prüfung ansteht. Über die Identifikationsnummer können die notwendigen Fahrzeugdaten zu der Arbeitsstation geladen werden um eine entsprechend angepaßte Prüfung durchzuführen.

Weiterhin kann ein Transpondersystem vorgesehen sein, welches aus einem Transponderelement und einem Sender/Empfänger besteht. Hierbei kann das Transponderelement einem bestimmten Prüfer zugeordnet sein, wobei dann der Prüfer, welcher das Fahrzeug durch die Prüfgasse bewegt jeweils an jeder Prüfsektion erkannt wird, wodurch eine eindeutige Zuweisung des Fahrzeugs zu den durchgeführten Messungen möglich ist. Dadurch kann ein Fahrzeug von einem Prüfer von einer Prüfgasse zu einer anderen Prüfgasse bewegt werden, ohne daß eine neue Identifikation des Fahrzeugs erforderlich ist, da beispielsweise eine Sektion 2 der Prüfgasse 2 durch den Sender/Empfänger des zugehörigen Transpondersystems erkennt, welches Fahrzeug zur Prüfung ansteht und daraufhin die Meßdaten in den Prüfdatensatz dieses Fahrzeugs schreibt.

Weiterhin ist erfindungsgemäß eine Vorrichtung zum Steuern eines Prüfstraßensystems für Kraftfahrzeuge vorgesehen, die aus mehreren Arbeitsstationen bestehen kann. Diese mehrere Arbeitsstationen können über ein LAN mit einem Lokalnetzserver verbunden sein, der jeweils in der Lage ist die notwendigen Daten für die Arbeitsstationen bereitzustellen und den Prüfdatensatz zu den Arbeitsstationen zu laden.

Erfindungsgemäß wird ein modulares und damit erweiterbares Fahrzeugprüfungssystem geschaffen, welches eine optimale Ausnutzung sämtlicher Prüfsektionen erlaubt. Weiterhin ist gewährleistet, daß eine automatisierte Fahrzeug- bzw. Prüfererkennung on line durchgeführt werden kann, so daß die Prüfvorgänge in optimaler Weise zeitlich optimiert sind, da für den Prüfer u.a. kein zusätzlicher Zeitaufwand für eine Fahrzeugidentifikation oder ein Einstellen der Prüfgeräte für den speziellen Fahrzeugtyp entsteht.

Durch den Einsatz von Chipkarte und Transponder wird weiterhin die Fehlerhäufigkeit bei allen fahrzeugrelevanten Daten minimiert, da der Prüfer beispielsweise nicht mehr an jeder Sektion das Fahrzeugkennzeichen in das System eingeben muß. Weiterhin ermöglicht das erfindungsgemäße Prüfsystem eine bessere Arbeitszeit- und Prüfstandsausnutzung bei einem verbesserten Fahrzeugdurchsatz.

Im folgenden werden vorteilhafte Ausführungsformen der Erfindung anhand von Zeichnungen näher erläutert. Es zeigen:
Fig. 1 eine schematische Darstellung einer Ausführungsform des erfindungsgemäßen Prüfstraßensystems;
Fig. 2 einen schematischen Flußlaufplan einer Abarbeitung in einer Bürosektion;
Fig. 3 einen schematischen Flußlaufplan einer Abarbeitung in einer Prüfsektion 1;
Fig. 4 einen schematischen Flußlaufplan einer Abarbeitung in einer Prüfsektion 2;
Fig. 5 einen schematischen Flußlaufplan einer Abarbeitung in einer Prüfsektion 3;
Fig. 6 einen Büro-Startbildschirm;
Fig. 7 einen Kundenverwaltungsbildschirm;
Fig. 8 einen Fahrzeugverwaltungsbildschirm;
Fig. 9 einen Meßbildschirm der Bürosektion;
Fig. 10 einen Startbildschirm der Prüfsektion 1 ohne Übernahme von Prüfername und Kennzeichen;
Fig. 11 einen Startbildschirm der Prüfsektion 1 mit Übernahme von Prüfername und Kennzeichen;
Fig. 12 einen Eingabebildschirm für visuelle Mängel;
Fig. 13 einen Unterbildschirm des in Fig. 12 dargestellten Bildschirms;
Fig. 14 einen Meßbildschirm;
Fig. 15 einen Unterbildschirm des in Fig. 14 dargestellten Bildschirms, sofern die Funktionstaste 2 gewählt wurde,
Fig. 16 einen Unterbildschirm von dem in Fig. 15 dargestellten Bildschirm, sofern die Funktionstaste 1 gewählt wurde,
Fig. 17 einen Bildschirm, der durch ein Betätigen der Funktionstaste 10 in Fig. 10 erzeugt wird und
Fig. 18 einen Bildschirm, der erzeugt wird, wenn bei dem in Fig. 17 dargestellten Bildschirm die Funktionstaste 3 betätigt wird.

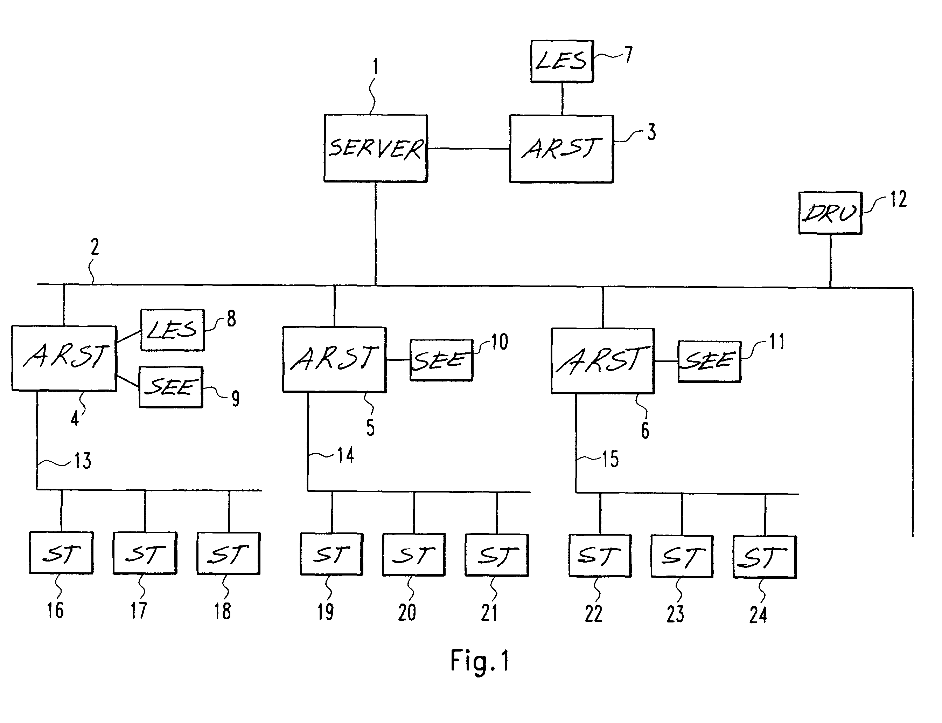

Die Fig. 1 zeigt ein Beispiel eines Prüfstraßensystems, bei dem nur eine Prüfgasse dargestellt ist.

Das erfindungsgemäße Prüfsystem weist einen Server 1 auf, der über ein Lokalnetz (LAN) 2 mit mehreren Arbeitsstationen 3-6 verbunden ist. Vorzugsweise ist der Server 1 und die Arbeitsstation 3 in einer Bürosektion des Prüfstraßensystems angeordnet. Mit der Arbeitsstation 3 ist ein erster Kartenleser 7 verbunden.

Die Arbeitsstationen 4-6 sind an der Prüfgasse angeordnet, wobei die Arbeitsstation 4 in der Prüfsektion I, die Arbeitsstation 5 in der Prüfsektion II und die Arbeitsstation 6 in der Prüfsektion III angeordnet sind.

Mit der Arbeitsstation 4 ist ein zweiter Kartenleser 8 und ein Sender/Empfänger 9 eines Transpondersystems verbunden.

Mit der Arbeitsstation 5 ist ein Sender/Empfänger 10 des Transpondersystems und mit der Arbeitsstation 6 ein Sender/Empfänger 11 des Transpondersystems verbunden. Weiterhin ist mit dem Lokalnetz 2 ein Drucker 12 verbunden, der als Ausgabegerät dient.

Die Arbeitsstationen 3 - 6 können als Eingabegeräte nicht dargestellte Tastaturen- und als Ausgabegeräte nicht dargestellte Bildschirme aufweisen. Weiterhin können zusätzliche und nicht dargestellte Drucker entweder lokal mit den jeweiligen Arbeitsstationen 3 - 6 und/oder mit dem Lokalnetz 2 Verbunden sein.

Mit den Arbeitsstationen 4 - 6 ist jeweils ein Feldbus 13 - 15 über jeweilige und nicht dargestellte Steuerknoten verbunden.

Mit den Feldbussen 13 - 15 sind Steuermodule 16 - 24 verbunden, die entsprechende und nicht dargestellte Prüfstationen steuern.

Die Prüfsektion I (Arbeitsstation 4) kann beispielsweise als Prüfstationen ein Scheinwerfereinstellgerät, einen Brennflüssigkeitstester, eine Dieselabgasprüfung und eine Benzinabgasprüfung umfassen. Somit wäre etwa das Steuermodul 16 dem Scheinwerfereinstellgerät, das Steuermodul 17 dem Bremsflüssigkeitstester und das Steuermodul 18 der Abgasprüfung zugeordnet. Die Steuermodule sind hierbei derart ausgebildet, daß sie den Prüfzyklus vollständig zu steuern in der Lage sind. Weiterhin ist es möglich, über den Felbus 13 den jeweiligen von dem Steuermodul 13-18 durchgeführten Prüfzyklus abzuändern und die jeweils erfaßten Meßwerte zu der Arbeitsstation 4 zu übertragen. Das eben Aufgeführte gilt in gleicher Weise für die Arbeitsstationen 5 und 6, für die Feldbusse 14 und 15, sowie für die Steuermodule 19 - 24.

Weiterhin sei an dieser Stelle angemerkt, daß in der Fig. 1 beispielhaft nur eine Prüfgasse dargestellt ist. Die zweite Prüfgasse würde sich unten an die Fig. 1 anschließen und wäre über eine Verlängerung des Lokalnetzes 2 nach unten mit dem Server 1 verbunden. In der Prüfgasse 2, die nicht dargestellt ist, könnten weitere Arbeitsstationen vorgesehen sein, welche wiederum jeweils Feldbusse mit daran angeordneten Steuermodulen aufweisen.

Die Datenübertragung des Feldbusses kann elektrisch über ein twisted pair Kabel erfolgen, optisch über einen Lichtwellenleiter oder elektromagnetisch. Dasselbe gilt für das Lokal netz 2.

Die Arbeitsstationen 4 - 6 weisen zudem, jeweils Schaltmodule auf, welche über eine Schaltelektrik die Prüfstände mit elektrischer Energie versorgen.

Die Steuermodule 16 - 24 stellen programmierbare Elektronikeinheiten dar, welche u.a. auch eine automatische Kalibrierung der Prüfgeräte vornehmen können. Die Feldbusse 13 - 15 können weiterhin durch ein LON (local operating network) gebildet sein.

Mit der Arbeitsstation 5, die der Prüfsektion II zugeordnet ist, können beispielsweise ein Radlauftester, ein Tachometerprüfstand, ein Stoßdämpferprüfstand und ein Bremsenprüfstand verbunden sein. Das Steuermodul 19 kann dabei beispielsweise mit dem Radlauftester, das Steuermodul 20 mit dem Tachometerprüfstand und das Steuermodul 21 mit dem Stoßdämpferprüfstand verbunden sein.

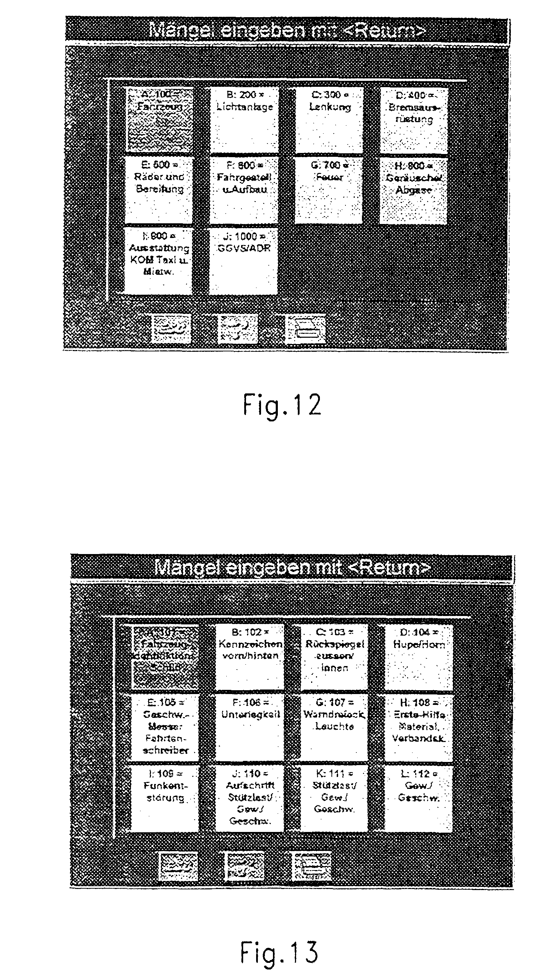

Die Arbeitsstation 6 ist der Prüfsektion III zugeordnet und kann der visuellen Mängeleingabe durch den Prüfer dienen. Hierbei können über ein nicht dargestelltes Eingabemedium, z.B. einen Touch-Screen-Bildschirm oder eine Tastatur durch den Prüfer visuelle Mängel am Fahrzeug eingegeben werden (vgl. Fig. 12 und 13).

Die der Arbeitsstation 6 in der Fig. 1 zugewiesenen Steuermodule 22 - 24 sind nur beispielhaft zusätzlich dargestellt, wobei angemerkt wird, daß diese für eine visuelle Mängeleingabe nicht notwendig sind.

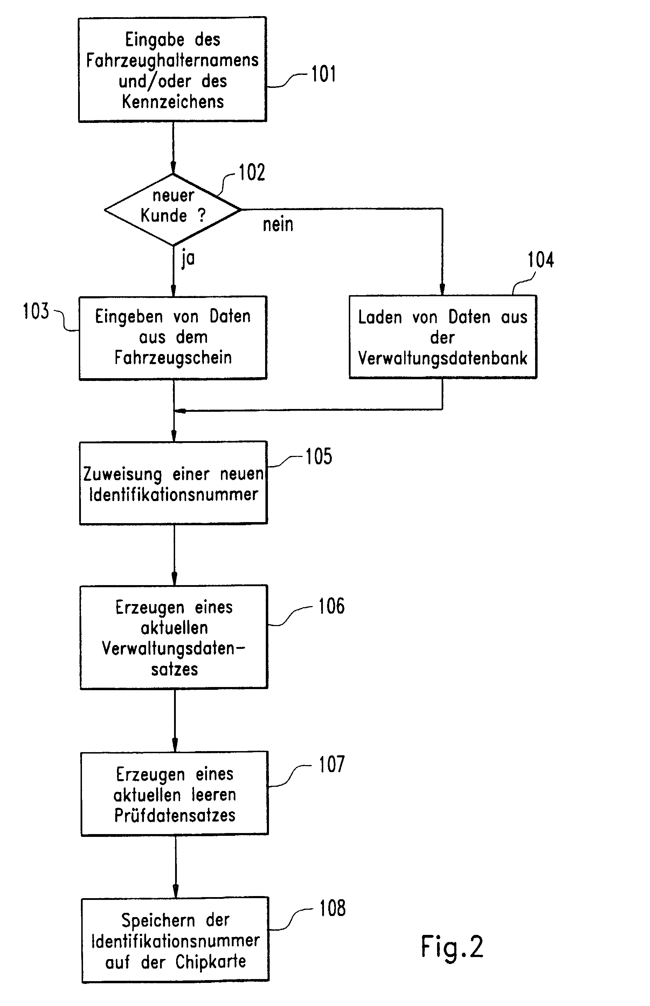

Bevor auf die schematischen Ablaufdarstellungen der Fig. 2 bis 5 näher eingegangen wird, soll zunächst der prinzipielle Aufbau der vom erfindungsgemäßen System erzeugten Datenbanken beschrieben werden. Dem erzeugten Datenbanksystem übergeordnet wird eine Verwaltungsdatenbank gebildet, die eine dem aktuellen Prüfvorgang zugeordnete Identifikationsnummer enthält. Weiterhin enthält die Verwaltungsdatenbank eine Nummer, die den Fahrzeugtyp identifiziert, den Namen des Halters und die Adresse des Halters. Die Verwaltungsdatenbank enthält somit durch die Nummer, die den Fahrzeugtyp identifiziert, eine relationale Verbindung zu einer Fahrzeugtypdatenbank. Die Verwaltungsdatenbank enthält weiterhin eine relationale Verbindung zu Prüfgerätedatenbanken, welche über die Identifikationsnummer, die parallel ebenso in jedem Prüfgerätedatensatz enthalten ist, hergestellt wird.

Weiterhin ist eine Systemdatenbank vorgesehen, die landesspezifische Grenzwerte und kundenspezifische Einstellungen enthält. Außerdem ist eine Prüferdatenbank vorgesehen, welche den Namen des Prüfers enthält und eine Zuweisung auf ein bestimmtes Transponderelement.

Die Fahrzeugtypdatenbank enthält fahrzeugspezifische Daten, welche beispielsweise über den Feldbus zu den betreffenden Steuermodulen geladen werden können, um einen spezifischen Prüfvorgang durchzuführen.

Die Prüfgerätedatenbanken sind derart aufgebaut, daß beispielsweise für den Bremsenprüfstand eine Bremsenprüfstandsdatenbank und für den Stoßdämpferprüfstand eine Stoßdämpferprüfstandsdatenbank erzeugt wird. Auf die Prüfgerätedatenbanken wird, wie oben schon erwähnt, über die Identifikationsnummer aus der Verwaltungsdatenbank heraus zugegriffen.

Die Fig. 2 zeigt einen systematischen Ablaufplan, der beispielsweise auf der Arbeitsstation 3 in der Bürosektion abgearbeitet wird. In einem Schritt 101 wird über eine Tastatur der Fahrzeughaltername und/oder das Fahrzeugkennzeichen eingegeben, wenn ein Kunde sein Fahrzeug für eine Prüfung aufnehmen läßt. Das System ermittelt dann durch eine Abfrage der Verwaltungsdatenbank in einem Schritt 102, ob dies ein neuer Kunde ist oder nicht. Sofern ein neuer Kunde im Schritt 102 ermittelt wurde, wird in einem Schritt 103 eine Dateneingabe gefordert. Einzugebende Daten wären etwa Daten aus dem Fahrzeugschein des zu prüfenden Fahrzeugs. Die Daten werden nach der Eingabe in die Verwaltungsdatenbank eingeschrieben. Sofern die Abfrage in Schritt 102 mit NEIN beantwortet wird, werden die schon vorhandenen Daten aus der Verwaltungsdatenbank in einem Schritt 104 geladen. Anschließend wird dem aktuellen Fahrzeugprüfvorgang eine neue Identifikationsnummer in einem Schritt 105 zugewiesen. Anschließend wird in einem Schritt 106 ein aktueller Verwaltungsdatensatz erzeugt, der u.a. die neue Identifikationsnummer enthält. Dann wird ein aktueller, leerer Prüfdatensatz in einem Schritt 107 erzeugt, woraufhin die Identifikationsnummer auf einer Chipkarte abgespeichert wird (Schritt 108).

Natürlich könnten auf der Chipkarte noch andere Daten abgespeichert werden. Denkbar ist es u.a. etwa durch die Chipkarte einen elektronischen Fahrzeugschein zu bilden, auf dem dann alle notwendigen Daten gespeichert wären.

Nachdem nun die notwendigen Daten von dem System erzeugt sind und eine aktuelle, neue Identifikationsnummer für diesen Prüfvorgang vergeben wurde, kann der eigentliche Prüfvorgang beginnen.

Nach dem Beschreiben der Chipkarte in der Bürosektion mit der Identifikationsnummer kann der Prüfer nach Erhalt der Chipkarte diese nun in den zweiten Chipkartenleser 8 der Prüfsektion 1 einschieben.

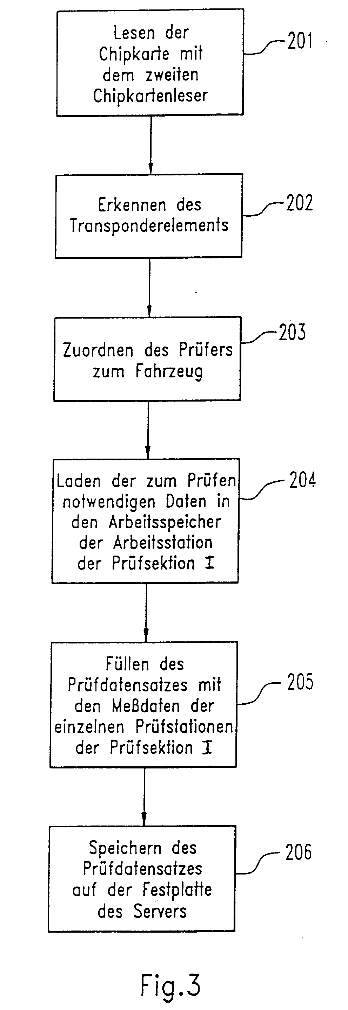

Wie in der Fig. 3 dargestellt ist, wird dann in einem Schritt 201 die Identifikationsnummer von der Chipkarte gelesen. In einem Schritt 203 wird dann von einem Sender/Empfänger des transpondersystems 9, welches mit der Arbeitsstation 4 der Prüfsektion I verbunden ist erkannt, daß ein bestimmter Prüfer nun das Fahrzeug prüft.

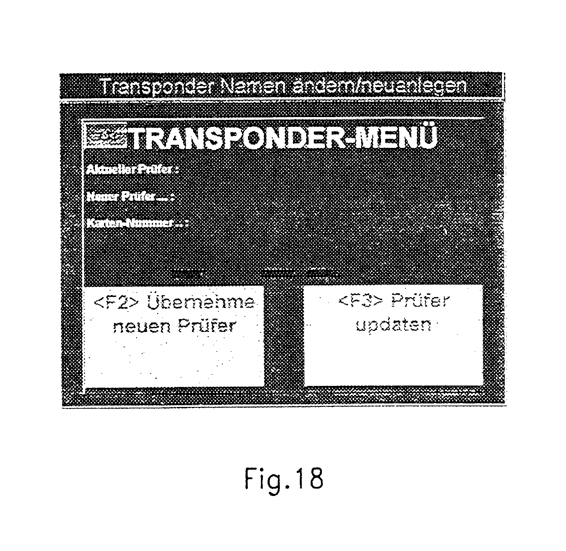

In der Prüferdatenbank, wie voranstehend beschrieben, ist beispielsweise der Name dieses Prüfers gespeichert und diesem Prüfer wird ein bestimmtes Transponderelement zugewiesen. Der Sender/Empfänger des Transpondersystems kann nun jedes einzelne Transponderelement identifizieren, so daß der Prüfer, welcher sein bestimmtes Transponderelement bei sich trägt, von dem System erkannt werden kann. Natürlich können den jeweiligen Transpondern auch andere Prüfer zugewiesen werden (vgl. Fig. 18).

Der voranstehend beschriebene Vorgang kann einfach etwa dadurch erfolgen, daß beispielsweise der Sender/Empfänger des Transpondersystems nahe der Tastatur der Arbeitsstation 4 der Prüfsektion 1 angeordnet ist. Wenn nun der Prüfer die aktuelle Chipkarte in den zweiten Kartenleser 8 einschiebt, erkennt der Sender/Empfänger des Transpondersystems automatisch zusätzlich den zu dem aktuellen Prüfvorgang zugeordneten Prüfer, so daß dadurch eine eindeutige Beziehung zwischen dem zu prüfenden Fahrzeug (über die Identifikationsnummer) und dem Prüfer erzeugt wurde.

Nachdem nun im Schritt 202 das Transponderelement erkannt wurde wird, wie voranstehend schon kurz angedeutet, in einem Schritt 203 der Prüfer dem Fahrzeug zugeordnet. Anschließend wird in einem Schritt 204 der Prüfdatensatz und alle zur Prüfung notwendigen Daten in den Speicher der Arbeitsstation 4 der Prüfsektion I geladen. Dieser Speicher ist etwa ein RAM. Die zur Prüfung notwendigen Daten enthalten insbesondere den Prüfdatensatz, der nun in einem Schritt 205 mit Prüfdaten gefüllt wird. Die Prüfdaten werden von den Prüfstationen über die zugeordneten Steuermodule 16 - 18 zur Arbeitsstation 4 übertragen. Das Übertragungsmedium ist hierbei der Feldbus 13. Natürlich können die zur Prüfung notwendigen Daten, welche im Schritt 204 geladen wurden ebenso Steuerdaten für die Prüfstationen enthalten. Diese Steuerdaten könnten dann über den Feldbus 13 zu den betreffenden Steuermodulen 16 - 18 übertragen werden, um evtl. fahrzeugspezifische Daten zu übertragen.

Nachdem alle Prüfstationen von dem Prüfer durchfahren wurden, ist die Datenerfassung abgeschlossen und die Prüfdaten bzw. der Prüfdatensatz kann auf der Festplatte des Servers 1 abgespeichert werden. Hierbei können die Prüfdaten in den Prüfdatenbanken mit der Identifikationsnummer abgespeichert werden.

Nach dem Durchfahren der Prüfsektion 1 kann der Prüfer nun das Fahrzeug zu einer Prüfsektion II (Arbeitsstation 5) bewegen. Diese Prüfsektion II kann sich nun beispielsweise in der gleichen Prüfgasse befinden oder in einer anderen Prüfgasse, wenn beispielsweise die Prüfsektion II der derzeitigen Prüfgasse belegt bzw. blockiert ist. Der Prüfer würde nun mit dem Fahrzeug beispielsweise auf den Radlauftester fahren. Dadurch erkennt das Steuermodul über einen geeigneten Sensoreingang, daß ein Fahrzeug zur Prüfung ansteht und teilt der Arbeitsstation 5 über den Feldbus 14 mit, daß nunmehr neue Meßdaten anstehen. Das Steuermodul wird nun selbsttätig aufgrund des in dem Steuermodul gespeicherten Programms einen Radlauftest durchführen und die Daten über den Feldbus in den Arbeitsspeicher der Arbeitsstation 5 übertragen.

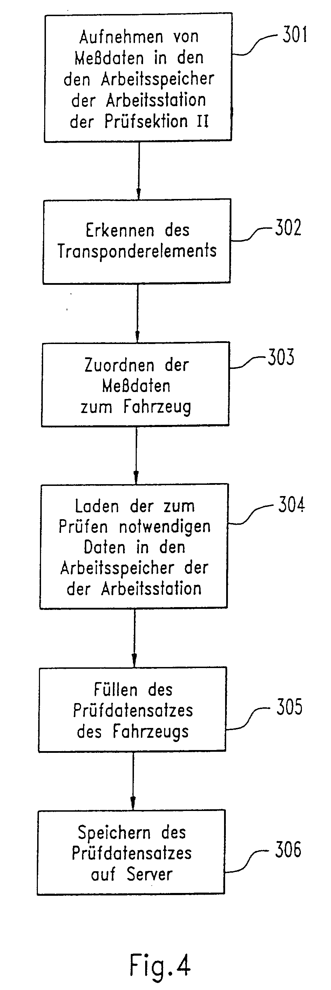

Dieser Vorgang ist in der Fig. 4 dargestellt, welche der Prüfsektion II zugeordnet ist. Im Schritt 301 werden die Meßdaten in den Arbeitsspeicher der Arbeitsstation 5 während dem Meßvorgang übertragen (wie oben beschrieben). In einem Schritt 302 wird nach Beendigung aller Messungen der Prüfsektion II, also am Ende der Prüfsektion II, von einem Sender/Empfänger 10 das Transponderelement des betreffenden Prüfers erkannt. Dadurch werden in einem Schritt 303 die Meßdaten dem Prüfer und damit dem Fahrzeug zugeordnet. Anschließend werden in einem Schritt 304 alle zum Füllen des Prüfdatensatzes notwendigen Daten in die Arbeitsstation 5 geladen und es wird der Prüfdatensatz in einem Schritt 305 mit den Prüfdaten des Fahrzeugs gefüllt. Anschließend werden die Prüfdaten in einem Schritt 306 auf dem Server abgespeichert.

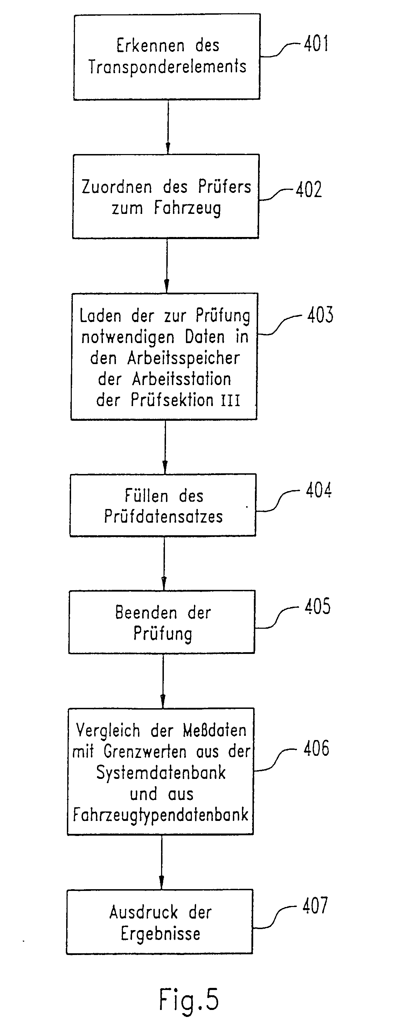

Die Fig. 5 zeigt einen Ablaufplan, der beispielsweise in der Prüfsektion III durchlaufen wird. In der Prüfsektion III ist der entsprechende Sender/Empfänger des Transpondersystems am Anfang der Sektion angeordnet. Somit wird das Fahrzeug, wenn es vom Prüfer zur Prüfsektion III bewegt wird, über das Transponderelement des Prüfers erkannt (Schritte 401 und 402). Anschließend werden die zur Prüfung notwendigen Daten in den Arbeitsspeicher der Arbeitsstation 6 in einem Schritt 403 geladen. Die in den Arbeisspeicher geladenen Daten können ebenso alle Meßwerte von vorangehend durchgeführten Messungen von vorher durchlaufenen Sektionen enthalten. Daraufhin wird in einem Schritt 404 der geladene Prüfdatensatz mit Meßwerten gefüllt (im vorliegenden Fall beispielsweise die vom Prüfer eingegebenen Mängel des Fahrzeugs aufgrund einer visuellen Mängeleingabe). Nach Abschluß der visuellen Überprüfung wird von dem Prüfer in einem Schritt 405 die Prüfung beendet, woraufhin in einem Schritt 406 die Meßdaten mit der aktuellen Identifikationsnummer mit Grenzwerten aus der Systemdatenbank und aus der Fahrteugtypendatenbank vergleichen werden. In einem Schritt 407 können anschließend die Ergebnisse ausgedruckt werden.

Prinzipiell können an jeder Arbeitsstetion sämtliche bis dahin durchgeführten Messwerte geladen werden.

An dieser Stelle sei angemerkt, daß das Transponderelement natürlich ebenso am Fahrzeug angeordnet werden kann, so daß die Erkennung des Fahrzeugs nicht über den Prüfer erfolgt, sondern durch das Fahrzeug direkt erfolgt.

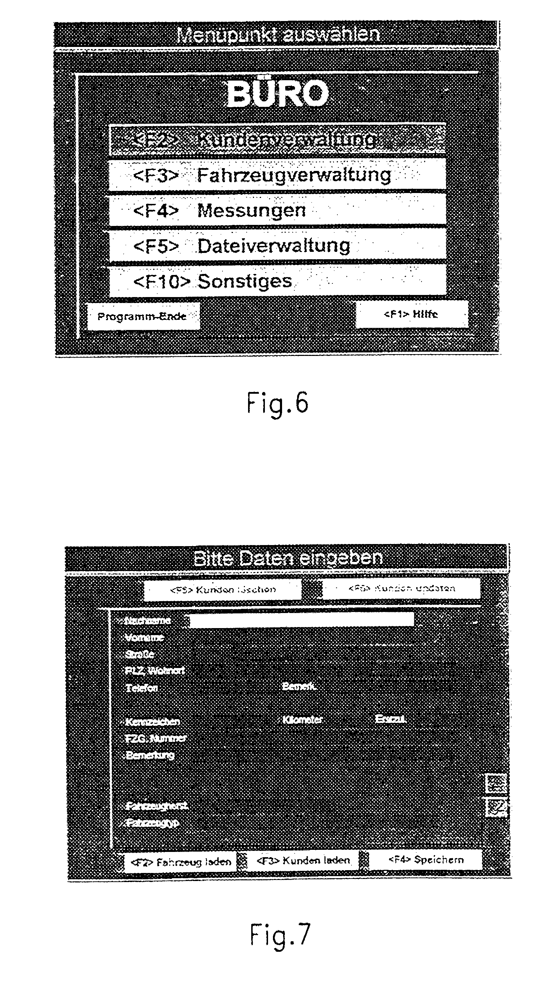

In der Fig. 6 ist der Startbildschirm gezeigt, wie er auf dem Bildschirm der Arbeitsstation 3 angezeigt wird. Die Arbeitsstation 3 befindet sich in der Bürosektion des erfindungsgemäßen Prüfsystems. Durch das Betätigen von Funktionstasten (F2, F3, F4, F5 und F10) kann der Benutzer nun verschiedene Optionen des Systems anwählen.

Die Fig. 7 zeigt eine Bildschirmdarstellung, die von dem System angezeigt wird, wenn etwa die Funktionstaste 2 betätigt wird. Wie dargestellt ist kanm nun der Name des Fahrzeughalters, das Fahrzeugkennzeichen, usw. eingegeben werden. Diese Daten werden in der Verwaltungsdatenbank abgespeichert. Wenn die Daten des Kunden schon im System bekannt sind, d.h. wenn die Daten schon in der Verwaltungsdatenbank gespeichert sind, genügt etwa die Eingabe des Kennzeichens des Fahrzeugs, um den in Fig. 7 dargestellten Bildschirm mit den entsprechenden Daten aus der Verwaltungsdatenbank zu füllen.

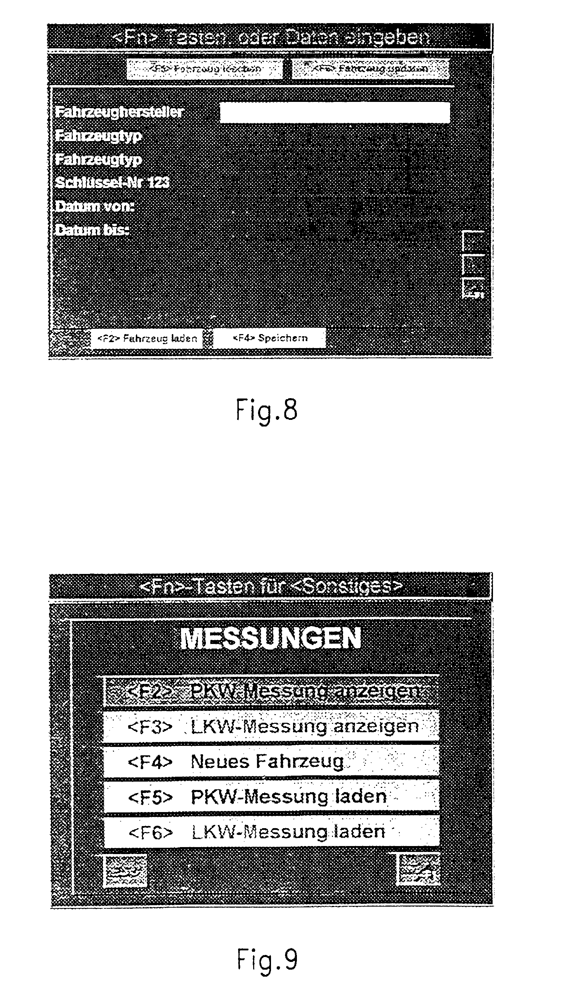

Die Fig. 8 zeigt den in der Bürosektion angezeigten Bildschirm, wenn etwa die Funktionstaste F3 des in der Fig. 6 dargestellten Startbildschirms betätigt wird.

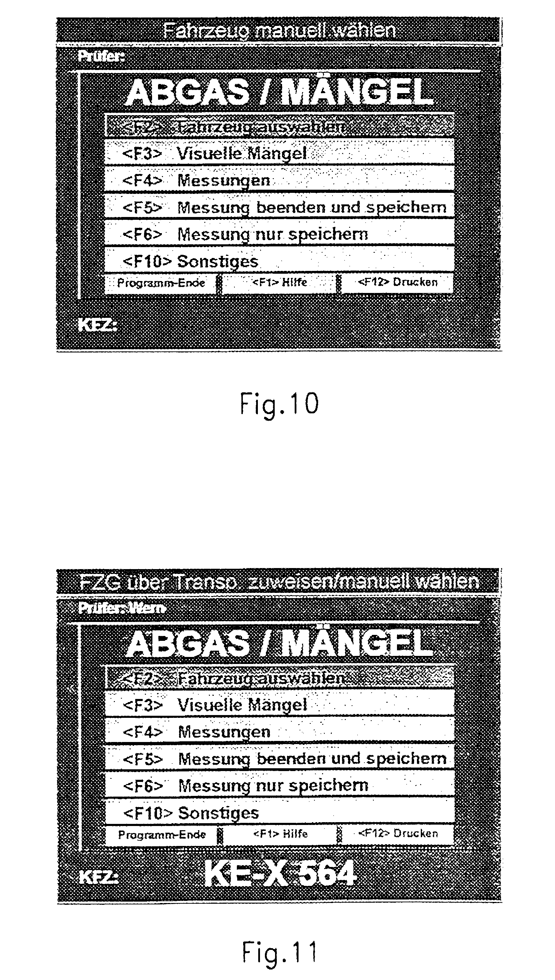

Die Fig. 9 zeigt den Bildschirm, der angezeigt wird, wenn die Funktionstaste F4 des Startbildschirms aus Fig. 6 betätigt wird.

Die Fic. 10 zeigt einen Startbildschirm, wie er etwa von der Arbeitsstation 4 der Prüfsektion I dargestellt wird, bevor der Prüfer die entsprechend in der Bürosektion programmierte Chipkarte in den zweiten Chipkartenleser 8 der Arbeitsstation 4 einschiebt. Das heißt, der in Fig. 10 dargestellte Bildschirm zeigt weder einen Prüfernamen noch ein KFZ-Kennzeichen.

In der Fig. 11 ist der Zustand des Systems dargestellt, nachdem der Prüfer die Chipkarte in den Kartenleser eingeschoben hat und nachdem der der Arbeitsstation 4 zugeordnete Sender/Empfänger des Transpondersystems das Transponderelement des betreffenden Prüfers erkannt hat. In der Fig. 11 sind die Felder für den Prüfer und das KFZ-Kennzeichen entsprechend gefüllt. Die Prüfung kann somit begonnen werden, wobei die Meßdaten dem Fahrzeug zugeordnet in den entsprechenden Prüfdatensatz geschrieben werden können.

Die Fig. 12 zeigt einen Bildschirm, wie er beispielsweise an der Arbeitsstation 6 angezeigt werden würde. Die Arbeitsstation 6 ist in der Prüfsektion 3 vorgesehen, in der eine visuelle Mängeleingabe durchgeführt wird. Wie in der Fig. 12 dargestellt ist, kann der Prüfer nun verschiedene Prüfungen durchführen, wobei er etwa, sofern der an der Arbeitsstation 6 angeordnete Bildschirm ein Touch-Screen-Bildschirm ist, durch ein einfaches Berühren der Auswahlfelder eine entsprechende Wahl treffen kann.

In der Fig. 13 ist ein Untermenü der Fig. 12 dargestellt, wenn in der Bildschirmdarstellung der Fig. 12 das Feld "A" angewählt wurde. Wie aus der Fig. 13 ersichtlich ist, können nun entsprechende Prüfungen vorgenommen und eingegeben werden. Sämtliche in der Fig. 13 dargestellte Auswahlfelder können wiederum Untermenüs enthalten, die jedoch nicht dargestellt sind.

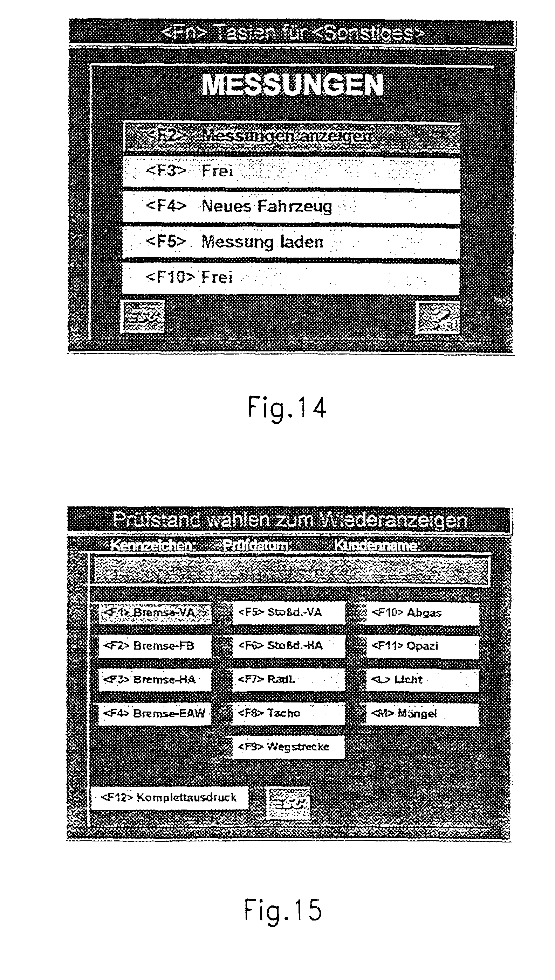

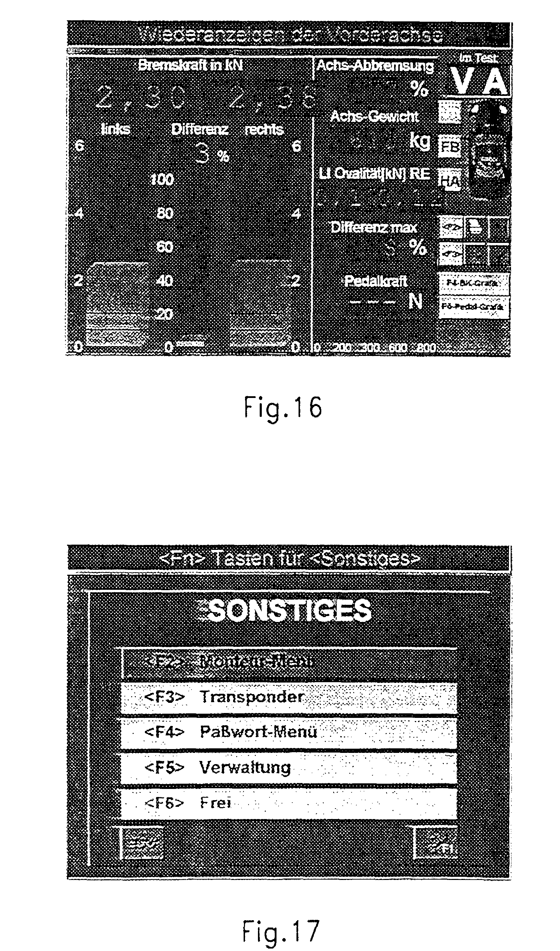

In der Fig. 14 ist ein Bildschirm dargestellt, der bei einer Betätigung der Funktionstaste F4, dargestellt in Fig. 10 und 11, auf einem entsprechenden Bildschirm einer Arbeitsstation 4 - 6 angezeigt wird. Durch eine Betätigung der Funktionstaste F2, wenn der in Fig. 14 dargestellte Bildschirm angezeigt wird, können Messungen angezeigt werden (Fig. 15). Wird nun bei einer Bildschirmdarstellung gemäß Fig. 15 die Funktionstaste F1 betätigt, so wird ein Bildschirm gemäß Fig. 16 dargestellt.

In der Fig. 17 ist ein Bildschirm dargestellt, welcher durch eine Betätigung der Funktionstaste F10 des Startbildschirms der Prüfgasse erzeugt wird (Fig. 10 und 11). Wird bei einer Anzeige des Bildschirms gemäß Fig. 17 beispielsweise die Funktionstaste F3 betätigt, so wird auf dem entsprechenden Bildschirm der Arbeitsstation eine Darstellung gemäß Fig. 18 erzeugt. In der Fig. 18 ist ein Transponder-Menü dargestellt, welches eine Zuweisung der Transponderelemente zu bestimmten Prüfern erlaubt.

Die oben beschriebenen Figuren 6 - 18 sollen nur Beispiele des erfindungsgemäßen Prüfsystems darstellen. Es versteht sich von selbst, daß das erfindungsgemäße System noch eine Vielzahl von anderen Bildschirmdarstellungen ermöglicht, um dem Prüfer geeignete Einflußmöglichkeiten auf das System zu bieten.

Zusätzlich kann das System noch durch eine Datenfernübertratungsoption erweitert werden, so daß dann etwa das Gesamtssystem einer Fernwartung unterzogen wird.

Weiterhin kann das System einfach an die speziellen Bedürfnisse der Benutzer angepaßt werden. Dies ist auch ohne aufwendiges Entwicklungswerkzeug möglich, so daß eine Änderung des Systems auch vor Ort realisierbar wird. Natürlich kann eine entsprechende Änderung auch über die oben erwähnte Datenfernübertragung erfolgen. Zur einfachen Anpassung des Programms an die Kundenwünsche, beispielsweise eine Veränderung der Bildschirmfarbe und der Bildschirmdarstellung, wurde eine C-Library erzeugt, die zusätzlich auch applikationsspezifische Routinen aufweisen kann, die dann über die Librarybefehle im Sourcetext angesprochen werden können.

## Patentansprüche

1. Verfahren zum Steuern eines zumindest eine Prüfgasse aufweisenden Prüfsystems für Kraftfahrzeuge zur Durchführung von entsprechenden Fahrzeugprüfungen, wobei zumindest zwei Prüfsektionen (I-III) vorgesehen sind, die jeweils zumindest eine Prüfstation (16-24) und eine Arbeitsstation (4-6) aufweisen, mit den folgenden Schritten:
- Erzeugen einer eindeutigen Identifikationsnummer, die einem aktuellen Fahrzeugprüfvorgang zugeordnet ist und der fahrzeugspezifische Daten zugewiesen sind,
- Bilden eines Prüfdatensatzes mit der Identifikationsnummer als Kennung, wobei der Prüfdatensatz eine vorbestimmte Anzahl von Datenfeldern aufweist,
- Laden des Prüfdatensatzes zu der Arbeitsstation (4-6) der Prüfsektion (I, II, III), an der sich das zu prüfende Kraftfahrzeug befindet,
- Durchführen eines fahrzeugspezifischen Prüfzyklus einer Prüfstation (16-24) und Erfassen von Meßdaten,
- Übergabe der Meßdaten zu der Arbeitsstation (4-6) und selektives Füllen der Datenfelder des Prüfdatensatzes mit den Meßdaten,
- Speichern des Prüfdatensatzes und
- Laden eines neuen Prüfdatensatzes zur anderen Arbeitsstation (4-6).

2. Verfahren nach Anspruch 1, dadurch gekennzeichnet, daß der Prüfzyklus einer Prüfstation von einem Steuermodul (16 - 24) gesteuert wird, das der jeweiligen Prüfstation zugeordnet ist.

3. Verfahren nach Anspruch 1 oder 2, dadurch gekennzeichnet, daß mehrere Prüfstationen vorgesehen sind und die jeweiligen Steuermodule (16 - 24) der Prüfstationen über einen Feldbus (13, 14, 15) elektrisch, optisch oder elektromagnetisch mit einem Steuerknoten verbunden sind.

4. Verfahren nach einem der Ansprüche 1 bis 3, dadurch gekennzeichnet, daß der Steuerknoten durch eine Feldbuskarte gebildet wird, die mit der Arbeitsstation (4 - 6) elektrisch verbunden ist.

5. Verfahren nach einem der Ansprüche 1 bis 4, dadurch gekennzeichnet, daß jeder Prüfstation eine vorbestimmte Anzahl von Datenfeldern des Prüfdatensatzes zugewiesen wird.

6. Verfahren nach einem der Ansprüche 1 bis 5, dadurch gekennzeichnet, daß ein erster und ein zweiter Chipkartenleser (7, 8) vorgesehen sind, wobei der erste Chipkartenleser (7) mit einer in einer Bürosektion angeordneten Arbeitsstation (3) elektrisch verbunden ist und die erzeugte Identifikationsnummer auf einer Chipkarte abgespeichert und der zweite Chipkartenleser (8) mit einer in einer Prüfsektion angeordneten Arbeitsstation (4) elektrisch verbunden ist und die Identifikationsnummer von der Chipkarte liest, so daß daraufhin der entsprechede Datensatz in den Speicher dieser Arbeitsstation (4) geladen wird.

7. Verfahren nach einem der Ansprüceh 1 bis 6, dadurch gekennzeichnet, daß ein Transpondersystem (9 - 11) vorgesehen ist, wobei das zu prüfende Fahrzeug einem Transponderelement zugeordnet wird und das Transpondersystem (9 - 11) eine Identifikation des Fahrzeugs an der Prüfstation erlaubt.

8. Verfahren nach einem der Ansprüche 1 bis 7, dadurch gekennzeichnet, daß
eine Verwaltungsdatenbank gebildet wird, die die Identifikationsnummer, Fahrzeughalterdaten, Kennzeichendaten, eine relationale Verbindung zu einer Fahrzeugtypendatendank und eine relationale Verbindung zur Prüfgerätedatenbank enthält,
eine Systemdatenbank gebildet wird, die geforderte Grenzwerte und kundenspezifische Einstellungen enthält, und
eine Prüferdatenbank gebildet wird, die den Namen des Prüfers in Verbindung mit einem bestimmten Transponderelement enthält, wobei
die Prüfgerätedatenbanken Prüfdaten der jeweiligen Prüfgeräte enthalten, auf die über die Identifikationsnummer zugegriffen wird.

9. Vorrichtung zum Steuern eines zumindest eine Prüfgasse aufweisenden Prüfsystems für Kraftfahrzeuge zur Durchführung von entsprechenden Fahrzeugprüfungen mit
- zumindest zwei Prüfsektionen (I-III), die jeweils zumindest eine Arbeitsstation (4-6) und zumindest eine Prüfstation (16-24) aufweisen, wobei jeder Prüfstation (16-24) ein Steuermodul (16-24) zugeordnet ist,
- einem Feldbus (13-15), der die zumindest eine Prüfstation mit der Arbeitsstation (4-6) verbindet und
- einer Steuereinheit, die die folgenden Schritte durchführt:
- Erzeugen einer eindeutigen Identifikationsnummer, die einem aktuellen Fahrzeugprüfvorgang zugeordnet ist und der fahrzeugspezifische Daten zugewiesen sind,
- Bilden eines Prüfdatensatzes mit der Identifkationsnummer als Kennung, wobei der Prüfdatensatz eine vorbestimmte Anzahl von Datenfeldern aufweist,
- Laden des Prüfdatensatzes zu der Arbeitsstation (4-6) des Systems,
- Durchführen eines fahrzeugspezifischen Prüfzyklus einer Prüfstation (16-24) und Erfassen von Meßdaten,
- Übergabe der Meßdaten zu der Arbeitsstation (4-6) und selektives Füllen der Datenfelder des Prüfdatensatzes mit den Meßdaten,
- Speichern des Prüfdatensatzes und
- Laden eines neuen Prüfdatensatzes zur anderen Arbeitsstation (4-6).

10. Vorrichtung nach Anspruch 9, dadurch gekennzeichnet, daß mehrere Arbeitsstationen (3 - 6) vorgesehen sind, die über ein Lokalnetz (2) miteinander verbunden sind.

11. Vorrichtung nach Anspruch 9 oder 10, dadurch gekennzeichnet, daß die Steuereinheit durch einen Lokalnetzserver (1) gebildet wird.

12. Vorrichtung nach einem der Ansprüche 9 - 11, dadurch gekennzeichnet, daß ein erster und ein zweiter Chipkartenleser (7, 8) vorgesehen sind, wobei der erste Chipkartenleser (7) mit einer in einer Bürosektion angeordneten Arbeitsstation (3) elektrisch verbunden ist und die erzeugte Identifikationsnummer auf einer Chipkarte abspeichert und der zweite Chipkartenleser (8) mit einer in einer Prüfsektion angeordneten Arbeitsstation (4) elektrisch verbunden ist und die Identifikationsnummer von der Chipkarte liest, so daß daraufhin der entsprechende Datensatz in den Speicher dieser Arbeitsstation (4) geladen wird.

13. Vorrichtung nach einem der Ansprüche 9 bis 12, dadurch gekennzeichnet, daß ein Transpondersystem (9 - 11) vorgesehen ist, wobei das zu prüfende Fahrzeug dem Transponderelement zugeordnet wird und das Transpondersystem (9 - 11) eine Identifikation des Fahrzeugs an der Prüfstation erlaubt.

## Claims

1. A method of controlling a motor vehicle test system comprising at least one test lane, for performing corresponding vehicle tests, at least two test sections (I-III) being provided each comprising at least one test station (16-24) and a workstation (4-6), comprising the following steps:
- generating an unambiguous identification number associated with a current vehicle test operation and allocated vehicle-specific data,
- forming a test data set with the identification number as identification, the test data set comprising a predetermined number of data fields,
- loading the test data set to the workstation (4-6) of the test section (I, II, III) where the vehicle under test is located,
- performing a vehicle-specific test cycle of a test station (16-24) and acquiring measurement data,
- transmitting the measurement data to the workstation (4-6) and selectively filling the data fields of the test data set with the measurement data,
- storing the test data set and
- loading a new test data set to the other workstation (4-6) .

2. A method according to claim 1, characterised in that the test cycle of a test station is controlled by a control module (16-24) associated with the respective test station.

3. A method according to claim 1 or 2, characterised in that a plurality of test stations are provided and the respective control modules (16-24) of the test stations are electrically, optically or electromagnetically connected to a control node via a field bus (13, 14, 15).

4. A method according to any one of claims 1 to 3, characterised in that the control node is formed by a field bus card electrically connected to the workstation (4-6) .

5. A method according to any one of claims 1 to 4, characterised in that each test station is allocated a predetermined number of data fields of the test data set.

6. A method according to any one of claims 1 to 5, characterised in that a first and a second chip card reader (7, 8) are provided, the first chip card reader (7) being electrically connected to a workstation (3) disposed in an office section and the generated identification number being stored on a chip card and the second chip card reader (8) being electrically connected to a workstation (4) disposed in a test section and reading the identification number from the chip card so that the corresponding data set is then loaded into the memory of this workstation (4).

7. A method according to any one of claims 1 to 6, characterised in that a transponder system (9-11) is provided, the vehicle under test being associated with one transponder element and the transponder system (9-11) allowing identification of the vehicle at the test station.

8. A method according to any one of claims 1 to 7, characterised in that a management data bank is formed which contains the identification number, vehicle keeper data, number plate data, a relational connection to a vehicle type data bank and a relational connection to the test equipment data bank,
a system data bank is formed which contains required critical values and client-specific settings and
a test data bank is formed which contains the name of the tester in connection with a specific transponder element,
the test equipment data bank containing test data of the respective test equipment which is accessed by the identification numbers.

9. Apparatus for controlling a motor vehicle test system comprising at least one test lane, for performing corresponding vehicle tests, comprising
- at least two test sections (I-III) each comprising at least one workstation (4-6) and at least one test station (16-24), each test station (16-24) being associated with a control module (16-24),
- a field bus (13-15) which connects the at least one test station to the workstation (4-6) and
- a control unit which performs the following steps:
- generating an unambiguous identification number associated with a current vehicle test operation and allocated vehicle-specific data,
- forming a test data set with the identification number as identification, the test data set comprising a predetermined number of data fields,
- loading the test data set to the workstation (4-6) of the system,
- performing a vehicle-specific test cycle of a test station (16-24) and acquiring measurement data,
- transmitting the measurement data to the workstation (4-6) and selectively filling the data fields of the test data set with the measurement data,
- storing the test data set and
- loading a new test data set to the other workstation (4-6).

10. Apparatus according to claim 9, characterised in that a plurality of workstations (3-6) are provided and are interconnected via a local network (2).

11. Apparatus according to claim 9 or 10, characterised in that the control unit is formed by a local network server (1).

12. Apparatus according to any one of claims 9 to 11, characterised in that a first and a second chip card reader (7, 8) are provided, the first chip card reader (7) being electrically connected to a workstation (3) disposed in an office section and the generated identification number being stored on a chip card and the second chip card reader (8) being electrically connected to a workstation (4) disposed in a test section and reading the identification number from the chip card so that the corresponding data set is then loaded into the memory of this workstation (4).

13. Apparatus according to any one of claims 9 to 11, characterised in that a transponder system (9-11) is provided, the vehicle under test being associated with the transponder element and the transponder system (9-11) allowing identification of the vehicle at the test station.

## Revendications

1. Procédé pour commander un système d'essai, comportant au moins une piste d'essai pour véhicules automobiles pour l'exécution d'essais correspondants de véhicules, selon lequel il est prévu au moins deux sections d'essai (I-III), qui comportent chacune au moins un poste d'essai (16-24) et un poste de travail (4-6), incluant les étapes suivantes :
- production d'un numéro d'identification net, qui est associé à un processus actuel d'essai de véhicule et auquel sont associées des données spécifiques au véhicule,
- obtention d'un ensemble de données d'essai avec comme indicatif le numéro d'identification, l'ensemble des données d'essai possédant un nombre prédéterminé de champs de données,
- chargement de l'ensemble de données d'essai dans le poste de travail (4-6) de la section d'essai (I, II, III), dans laquelle se situe le véhicule à tester,
- exécution d'un cycle d'essai, spécifique au véhicule, dans un poste d'essai (16-24) et acquisition de données de mesure,
- transfert des données de mesure au poste de travail (4-6) et remplissage sélectif des champs de données de l'ensemble de données d'essai avec les données de mesure,
- mémorisation de l'ensemble de données d'essai, et
- chargement d'un nouvel ensemble de données d'essai dans l'autre poste de travail (4-6).

2. Procédé selon la revendication 1, caractérisé en ce que le cycle d'essai d'un poste d'essai est commandé par un module de commande (16-24), qui est associé au poste d'essai respectif.

3. Procédé selon la revendication 1 ou 2, caractérisé en ce que plusieurs postes d'essai sont prévus et que les modules respectifs de commande (16-24) des postes d'essai sont reliés électriquement, optiquement ou électromagnétiquement à un noeud de commande, par l'intermédiaire d'un bus de transmission de champs (13, 14, 15).

4. Procédé selon l'une des revendications 1 à 3, caractérisé en ce que le noeud de commande est formé par une carte du bus de transmission de champ, qui est relié électriquement au poste de travail (4-6).

5. Procédé selon l'une des revendications 1 à 4, caractérisé en ce qu'à chaque poste d'essai est affecté un nombre prédéterminé de champs de données de l'ensemble de données d'essai.

6. Procédé selon l'une des revendications 1 à 5, caractérisé en ce qu'un premier lecteur de cartes à puce et un second lecteur de cartes à puce (7, 8) sont prévus, le premier lecteur de cartes à puce (7) étant relié électriquement à un poste de travail (3) disposé dans une section de bureau, et le numéro d'identification de produit étant mémorisé sur une carte à puce, et le second lecteur de cartes à puce (8) étant relié à un poste de travail (4) disposé dans un poste d'essai, et lisant le numéro d'identification de la carte à puce de sorte qu'ensuite l'ensemble correspondant de données est chargé dans la mémoire de ce poste de travail (4).

7. Procédé selon l'une des revendications 1 à 6, caractérisé en ce qu'il est prévu un système de transpondeur (9-11), le véhicule à tester étant associé à un élément transpondeur, et le système à transpondeur (9-11) permettant une identification du véhicule au niveau du poste d'essai.

8. Procédé selon l'une des revendications 1 à 7, caractérisé en ce qu'une banque de données de gestion est formée, banque qui contient les numéros d'identification, les données des propriétaires de véhicules, les données de plaques d'immatriculation, une liaison relationnelle avec une banque de données de types de véhicules, et une liaison relationnelle avec la banque de données d'appareils d'essai,
une banque de données du système est formée, banque qui contient des valeurs limites requises et des réglages spécifiques aux clients, et
une banque de données de l'essayeur, qui contient le nom de l'essayeur en liaison avec un élément transpondeur déterminé,
les banques de données des appareils d'essai contenant des données d'essai des appareils d'essai respectifs, auxquels l'accès est réalisé au moyen de numéros d'identification.

9. Dispositif pour commander au moins un système d'essai, comportant une piste d'essai, pour des véhicules automobiles pour l'exécution d'essais correspondant de véhicules, comprenant :
- au moins deux sections d'essai (I-III), qui possèdent chacune au moins un poste de travail (4-6) et au moins un poste d'essai (16-24), un module de commande (16-24) étant associé à chaque poste d'essai (16-24),
- un bus de transmission de champs (13-15), qui relie le au moins un poste d'essai au poste de travail (4-6), et
- une unité de commande qui exécute les étapes suivantes :
- production d'un numéro d'identification net, qui est associé à un processus actuel d'essai de véhicule et auquel sont associées des données spécifiques au véhicule,
- obtention d'un ensemble de données d'essai avec comme indicatif le numéro d'identification, l'ensemble des données d'essai possédant un nombre prédéterminé de champs de données,
- chargement de l'ensemble de données d'essai dans le poste de travail (4-6) du système,
- exécution d'un cycle d'essai, spécifique au véhicule, dans un poste d'essai (16-24) et acquisition de données de mesure,
- transfert des données de mesure au poste de travail (4-6) et remplissage sélectif des champs de données de l'ensemble de données d'essai avec les données de mesure,
- mémorisation de l'ensemble de données d'essai, et
- chargement d'un nouvel ensemble de données d'essai dans l'autre poste de travail (4-6).

10. Dispositif selon la revendication 9, caractérisé en ce qu'il est prévu plusieurs postes de travail (4-6), qui sont reliés entre eux par l'intermédiaire d'un réseau local (2).

11. Dispositif selon la revendication 9 ou 10, caractérisé en ce que l'unité de commande est formée par un serveur (1) du réseau local.

12. Dispositif selon l'une des revendications 9-11, caractérisé en ce qu'un premier lecteur de cartes à puce et un second lecteur de cartes à puce (7, 8) sont prévus, le premier lecteur de cartes à puce (7) étant relié électriquement à un poste de travail (3) disposé dans une section de bureau, et le numéro d'identification de produit étant mémorisé sur une carte à puce, et le second lecteur de cartes à puce (8) étant relié à un poste de travail (4) disposé dans un poste d'essai, et lisant le numéro d'identification de la carte à puce de sorte qu'ensuite l'ensemble correspondant de données est chargé dans la mémoire de ce poste de travail (4).

13. Dispositif selon l'une des revendications 9 à 12, caractérisé en ce qu'il est prévu un système de transpondeur (9-11), le véhicule à tester étant associé à un élément transpondeur, et le système à transpondeur (9-11) permettant une identification du véhicule au niveau du poste d'essai.
